# EUROPEAN PATENT APPLICATION

(11) **EP 2 234 258 A1**
(43) Date of publication of application: **29.09.2010**
(21) Application number: 09155883.3
(22) Date of filing: 23.03.2009
(51) Int. Cl.: H02M 3/335, H02M 1/44, H02M 1/38

(54) **Indirect d.c. converter with a switching frequency being dependent on the load and the input voltage and a dead time depending on the switching frequency**

(71) Applicant: Anaview AB, 252 32 Helsingborg (SE); Mitsubishi Electric Corporation, Tokyo 100-8310 (JP)
(72) Inventor: Boström, Patrik, 256 57 Ramlösa (SE)
(74) Representative: Andersson, Björn E.

(57) **Abstract**

A control circuitry for controlling operation of switches of a non-regulated DC-to-DC converter is disclosed. The converter comprises a transformer having a primary winding, which is arranged to be excited by means of electricity provided through the switches, and an output connected to at least one secondary winding of the transformer via a rectifier circuitry and suitable to provide an output voltage to a load circuitry. The control circuitry comprises measuring means arranged to determine a load caused by any load circuitry; and adjustment means arranged to adjust a switching frequency for operating the switches in response to the determined load such that the switching frequency is decreased for an increased load and vice versa. A non-regulated DC-to-DC converter, a method for controlling operation of switches, and a computer program are also disclosed.

## Description

### Technical field

The present invention relates to a control circuitry for controlling operation of switches of a non-regulated DC-to-DC (Direct Current to Direct Current) converter, to such a non-regulated DC-to-DC converter, to a method for controlling the operation, and to a computer program for implementing the method.

### Background

A DC-to-DC converter is a circuit which converts a source of direct current (DC) from one voltage level to another. Electronic switch-mode DC-to-DC converters convert one DC voltage level to another by providing the input energy to a reactive component and then taking that energy to the output at a different voltage. The reactive component may comprise magnetic components, such as inductors or transformers. In such a magnetic DC-to-DC converter, energy is periodically converted into and from a magnetic field in the inductor or transformer. By adjusting a duty cycle of the charging voltage, that is the ratio of on/off time, the amount of power transferred can be controlled. Usually, this is done to control the output voltage, though it could be done to control the input current, the output current, or maintaining a constant power. However, in non-regulated DC-to-DC converters, such control is omitted. Instead, the non-regulated DC-to-DC converter provides its output as efficiently as possible at any time. This is for example preferable in audio amplifier applications. A switching frequency for controlling switch operation is provided such that an alternating field is provided for storing and releasing the magnetic field. To enable zero voltage switching, a deadtime, i.e. a time where all switches for exciting the inductor or transformer are closed, is employed between storing and releasing. Traditionally, the switching frequency and deadtime are decided upon design of the non-regulated DC-to-DC converter.

The non-regulated DC-to-DC converter is beneficial since it do not need any inductance before or after the transformer to store energy during off-times, which improves efficiency and saves space and cost. The magnetizing current in the transformer is used to self-commute the switch node such that the zero-voltage switching is enabled, which further improves efficiency. To ensure this self-commuting state, the magnetizing current needs to be kept high enough, which is done by design of the magnetizing inductance in the transformer. Here, the deadtime needs to be long enough to allow for full commuting. Upon proper design, these non-regulated DC-to-DC converters are highly efficient.

However, for example in audio applications where the user may be enabled to select between a wide range of power outputs, the design may be cumbersome. Normally, the design of the DC-to-DC converter is then made for maximum power output, while the efficiency for lower power outputs then may become lower. Further, if input voltage may vary, the transformer have to be designed for the maximum voltage since that will provide the maximum flux in the core, and for any lower voltage, there will then be more winding turns on the transformer, resulting in higher resistance, than necessary. It is therefore a desire to provide a design that is more versatile.

### Summary

The present invention is based on the understanding that the switching frequency can be controlled in ambition to improve performance at a wider range of output of power. The inventor has realized for example that at low power output, efficiency is improved by increasing the switching frequency, while any caused interference by switching at high power output is decreased, at least in sensitive frequency bands, upon decreasing the switching frequency, i.e. to comply with requirements on electromagnetic compatibility (EMC). Thus, the approach according to the invention is to adjust switching frequency based on the load of the non-regulated DC-to-DC converter. Further improvements have also been considered by the inventor, which is reflected in the various embodiments. Among these, there are adjustment of deadtime to the adjusted switching frequency, further adjustment of the switching frequency depending on input voltage to the DC-to-DC converter, and application of a jitter to the switching frequency to smoothen any interference over frequency. The switching frequency may also be adjusted to keep flux constant or at least under control at different input voltages and/or loads.

According to a first aspect, there is provided a control circuitry for controlling operation of switches of a non-regulated DC-to-DC converter, which comprises a transformer having a primary winding, which is arranged to be excited by means of electricity provided through the switches, and an output connected to at least one secondary winding of the transformer via a rectifier circuitry and suitable to provide an output voltage to a load circuitry. The control circuitry comprises measuring means arranged to determine a load caused by any load circuitry; and adjustment means arranged to adjust a switching frequency for operating the switches in response to the determined load such that the switching frequency is decreased for an increased load and vice versa.

The measuring means may be arranged to determine the load by measurement of any of an input current to the converter, an output current from the converter, or a current through any of the windings of the transformer.

The adjustment means may further be arranged to adjust a deadtime where neither of the switches conduct such that zero voltage switching is maintained. The adjustment of the deadtime may cause deadtime to increase upon increased switching frequency, and vice versa.

The control circuitry may further comprise voltage measuring means arranged to determine an input voltage to the converter, and the adjustment means may further be arranged to adjust the switching frequency in response to the determined input voltage such that the switching frequency is increased for a determined increased input voltage, and vice versa.

The adjustment means may further be arranged to vary the adjusted switching frequency by application of a jitter for spreading any switching noise in frequency.

According to a second aspect, there is provided a non-regulated DC-to-DC converter comprising a transformer having a primary winding and at least one secondary winding; an exciter circuit comprising at least two switches and being arranged to excite the primary winding, wherein the at least one secondary winding is connected via a rectifier circuitry to an output of the converter suitable to provide an output voltage to a load circuitry; and a control circuitry according to the first aspect.

The exciter circuit may comprise two switches forming a half-bridge, or four switches forming a full-bridge, or two two-way switches forming a push-pull circuit.

According to a third aspect, there is provided a method for controlling operation of switches of a non-regulated DC-to-DC converter comprising a transformer comprising a primary winding and at least one secondary winding; an exciter circuit comprising at least two switches and being arranged to excite the primary winding of the transformer, wherein the at least one secondary winding is connected via a rectifier circuitry to an output of the converter suitable to provide an output voltage to a load circuitry. The method comprises determining a load caused by any load circuitry; and adjusting a switching frequency for operating the switches in response to the determined load such that the switching frequency is decreased for an increased load and vice versa.

The determining of the load may comprise measuring any of an input current to the converter, an output current from the converter, or a current through any of the windings of the transformer.

The method may further comprise adjusting a deadtime where neither of the switches conduct such that zero voltage switching is maintained. The adjusting of the deadtime may comprise increasing deadtime upon increased switching frequency, and vice versa.

The method may further comprise determining an input voltage to the converter; and further adjusting the switching frequency in response to the determined input voltage such that the switching frequency is increased for a determined increased input voltage, and vice versa.

The method may further comprise varying the adjusted switching frequency by application of a jitter such that any switching noise is spread in frequency.

According to a fourth aspect, there is provided a computer program comprising program code comprising instructions which when executed on a processor causes the processor to perform the method according to the third aspect.

### Brief description of drawings

Fig. 1 is a block diagram schematically illustrating a control circuitry according to an embodiment.
Fig. 2 is a schematic timing diagram illustrating switching and winding voltage.
Fig. 3 schematically illustrates a half-bridge switch setup.
Fig. 4 schematically illustrates a full-bridge switch setup.
Fig. 5 schematically illustrates a push-pull switch setup.
Fig. 6 illustrates an equivalent circuit to a transformer.
Fig. 7 illustrates a simplified model of parasitic capacitances of a switch.
Figs 8 and 9 schematically illustrate exemplary configurations of secondary windings and rectifier circuitry.
Fig. 10 schematically illustrates adaption of deadtime for various switching frequencies.
Fig. 11 is a flow chart illustrating a method according to embodiments.
Fig. 12 schematically illustrates a computer readable medium for a computer program according to embodiments.

### Detailed description

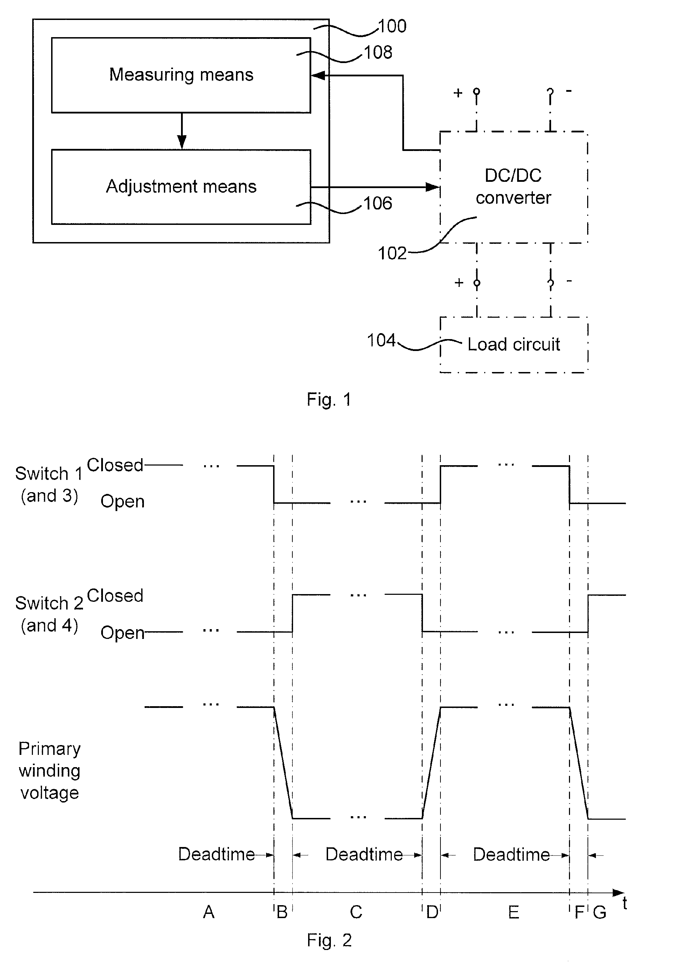

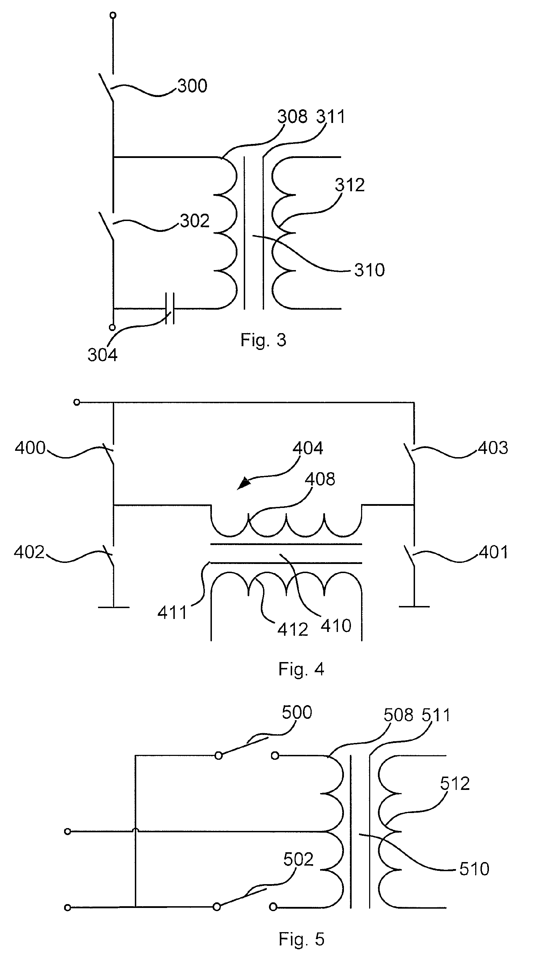

Fig. 1 is a block diagram schematically illustrating a control circuitry 100 for controlling operation of a DC-to-DC converter 102, which is arranged to provide power to a load 104, e.g. an audio amplifier. The DC-to-DC converter 102 preferably comprises a resonant circuit comprising a capacitor and a primary winding of a transformer, the capacitor and primary winding being arranged in series. This is demonstrated with reference to Figs. 3 and 4.

Fig. 3 schematically illustrates a half-bridge approach comprising two switches 300, 302 connected in series between a supply DC voltage and for example ground or a negative supply voltage. The switches 300, 302 are operated to excite a primary winding 308 of a transformer 310. The transformer 310 also comprises a transformer core 311 and at least one secondary winding 312. A capacitor 304 can preferably be connected in series with the primary winding 308 for AC coupling. Upon choosing the capacitor, it is preferable the capacitor and the primary winding 308 do not cause resonance at any frequency in which the converter is intended to be switched in.

Fig. 4 schematically illustrates a full-bridge approach comprising four switches 400-403 connected pairwise in series between a supply DC voltage and for example ground or a negative supply voltage. The switches 400-403 are operated to excite a primary winding 408 of a transformer 410. The transformer 410 also comprises a transformer core 411 and at least one secondary winding 412.

Fig. 5 schematically illustrates a push-pull approach comprising two switches 500, 502 arranged to alternately connect a ground or a negative supply voltage to either side of a primary winding 508 to which a supply DC voltage is connected to a center of the primary winding 508 to excite the primary winding 508 of a transformer 510. Thus, an alternating flux is provided in the transformer 510. The transformer 510 also comprises a transformer core 511 and at least one secondary winding 512.

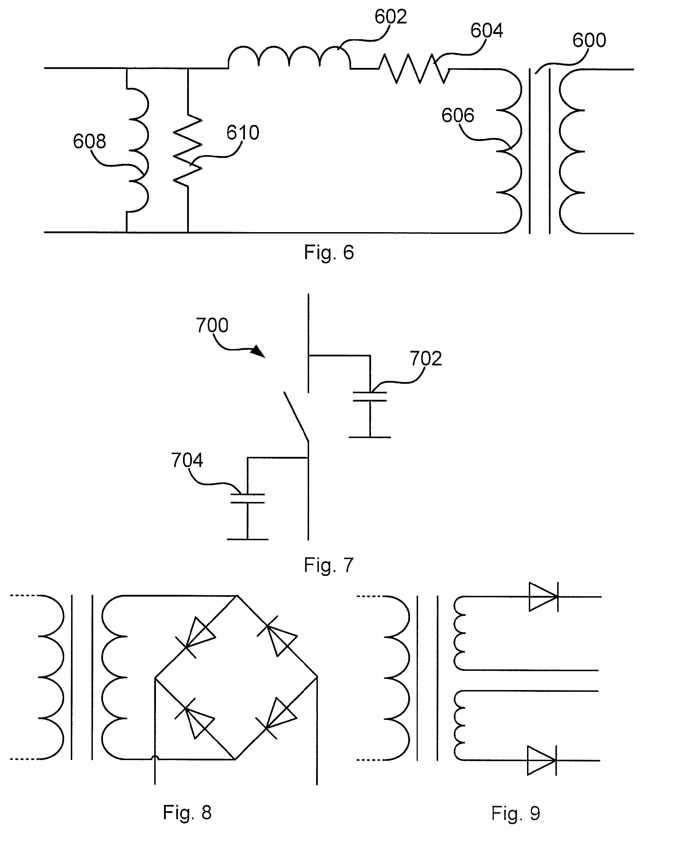

Returning to Fig. 1, the control circuitry 100 is arranged to control operation of switches 300, 302, 400-403, 500, 502 and comprises an adjustment means 106 arranged to adjust at least the switching frequency of the periodic switching pattern of the switches. The adjustment means can further be arranged to adjust a deadtime, i.e. a time where neither of the switches are closed and which enables zero-voltage switching. For the understanding of the operation, Fig. 6 illustrates an equivalent circuit to a transformer, where an ideal transformer 600 with a leakage inductance 602 and a series resistor 604 in series with the ideal primary winding 606, and a magnetizing inductance 608 and a magnetizing resistance 610 in parallel. The leakage inductance 602 accounts for flux leakage, the series resistor 604 is the resistance of the wire of the primary winding 308, 408, 508 of the non-ideal transformer 310, 410, 510, the magnetizing inductance 608 accounts for finite permeability of the transformer core 311, 411, 511, and the magnetizing resistance 610 represents core loss of the transformer core 311, 411, 511. Fig. 7 schematically illustrates a parasitic capacitance model of a solid state switch 700 with capacitances 702, 704 of drain and source are provided to ground. The capacitances 702, 704 are simplified representations of the different parasitic capacitances of the solid state switch.

Fig. 2 schematically illustrates timing of operation of the switches and the resulting voltage across the primary winding. During a first period A, a first switch 300, 500 (a first and a third switch 400, 401) is (are) closed and a second switch 302, 502 (a second and a fourth switch 402, 403) is (are) open. Thus, a voltage is applied across the primary winding and a current is driven in a first direction through the primary winding. This loads the transformer with magnetic energy. Considering the equivalent circuit of Fig. 6, both the ideal transformer 600 and the magnetizing inductance 608, as well as the leakage inductance 602 will be loaded. Here, the leakage inductance 602 is preferable to keep as low as possible, which can be done by selecting a suitable high quality transformer with low flux leakage. When entering period B, the first switch 300, 500 (a first and a third switch 400, 401) open(s). Again, considering the equivalent circuit of Fig. 6. The leakage inductance 602 forces current to remain a while, but as the leakage inductance 602 preferably is small, this effect is minor. On the other hand, the loaded magnetizing inductance 608 forces current to flow, which gives a voltage which charges parasitic capacitances of the switches. If necessary, snubbers, i.e. transient managing circuitry, e.g. a resistor and capacitor in series, can be provided to help coping with any caused charges. The load of the magnetizing inductance is finite and the voltage across the primary winding will change, i.e. the transformer will self-commute, such that zero voltage switching can be made when the power supply is re-connected. When entering period C, the second switch 302, 502 (the second and fourth switches 402, 403) close(s). The supplied voltage via the switches then drives a current in a second direction opposite to the first direction through the primary winding. When entering period D, the second switch 302, 502 (the first and third switches 402, 403) open(s), and the inductance of the primary winding forces current to remain a while, similar to during period B, but with currents in the opposite direction, i.e. the transformer will again self-commute. When entering period E, the first switch 300, 500 (the first and third switches 400, 401) close(s). As during period A, a voltage is applied across the primary winding and a current is driven in a first direction through the primary winding. The switching then continues in a similar way, i.e. period F resembles period B and period G resembles period C, etc.

Here, it can be seen that a suitable deadtime preferably depends on voltage changing properties dV/dt of the reactive components. It is also recognized that the changing magnetic field caused by the primary winding 308, 408 induces a current in the secondary winding 312, 412. The secondary winding or windings can thus be connected to a load via a rectifier circuitry, for example as illustrated in Fig. 8 or 9.

Returning again to Fig. 1, the control circuitry 100 further comprises measuring means 108 arranged to determine the load of the DC-to-DC converter 102 caused by the load circuit 104. This can be made by determining input current to the converter 102 or output current from it. It can also be made by determining current through the primary or secondary winding. The determination is preferably a measurement of any of the currents, e.g. by a choke or in case of measuring the current of any of the windings, by a measuring winding. Based on the determined load, the adjustment means 106 adjusts the switching frequency such that for a light load, a higher frequency is assigned, while for a heavier load, a lower frequency is assigned. The inventors have found this to be particularly beneficial for several reasons. An advantage of assigning a lower frequency for heavier loads is that switching losses are reduced. Another advantage of assigning a lower frequency for heavier loads is that caused interference, which of course is increased at higher currents, can be put at frequencies where it makes less harm, and EMC requirements can be fulfilled. An advantage of assigning a higher frequency for light loads is that idle or close to idle consumption drops significantly. At the currents of a light load, the low level of any interference caused is harmless at the higher frequencies, and EMC requirements can be fulfilled. Thus, a suitable function between switching frequency and load is assigned. The function can provide continuous or stepwise adjustment of the switching frequency. The control circuitry 100 preferably comprises a processor for implementing the function.

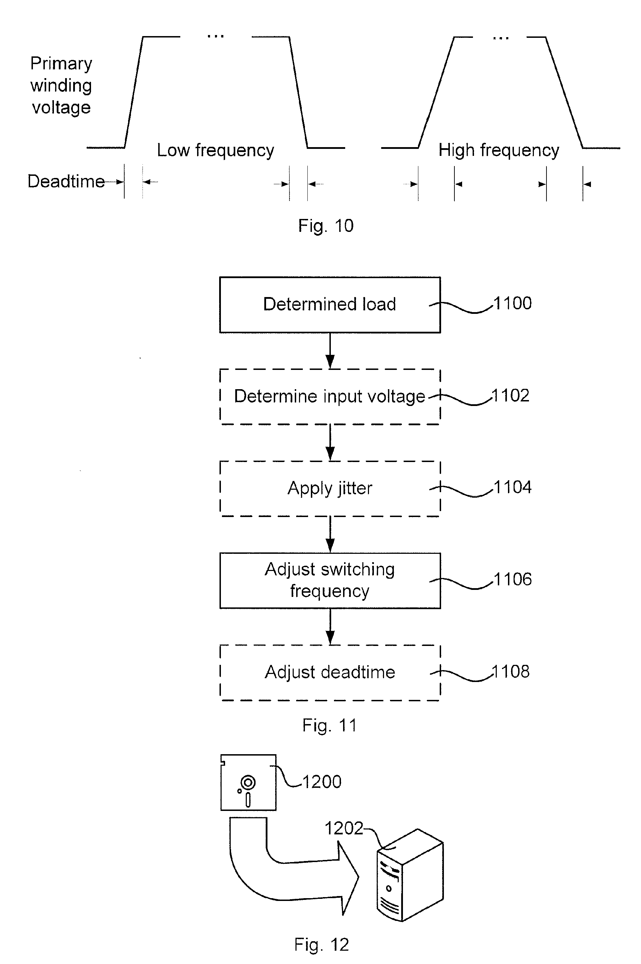

When the switching frequency is adjusted up to be higher, magnetizing current will be lower, which gives a lower dV/dt. To further improve control of switching, the adjustment means 106 can be further arranged to adjust the deadtime to adapt to the changing dV/dt. The adjustment of deadtime can therefore be performed in relation to the assigned switching frequency, where at increased switching frequency, the adjustment means 106 increases deadtime, and hence at decreased switching frequency, the adjustment means 106 decreases deadtime. This is schematically illustrated in Fig. 10. Thus, a suitable function between switching frequency and deadtime is assigned. The function can provide continuous or stepwise adjustment of the deadtime. The control circuitry 100 preferably comprises a processor for implementing the function.

The inventor has also found that the magnetizing current in the transformer varies proportionally to applied voltage. The applied voltage may vary due to variation in supply voltage. By further adjusting the switching frequency in dependence on determined applied voltage, which can be measured, flux density in the transformer core can be kept under control. This is performed by increasing switching frequency at increased voltage, and decreasing the switching frequency at decreased voltage.

Switched circuitry, especially at high currents, may introduce interference in frequency bands of the switching frequency and its harmonics. The inventor has found that interference can be made less harmful if spread in frequency, i.e. power of interference at a particular frequency will be lower since the total interference power is divided over a multitude of frequencies. This can be performed by letting the adjustment means 106 apply a jitter to the assigned switching frequency. The spread of the jitter can be assigned dependent on for example the actual currents and/or the assigned switching frequency.

Thus, the switching frequency is determined from the load, and optionally also from the input voltage and/or with an applied jitter. The deadtime can be adjusted in accordance with the resulting switching frequency. The gain can be, depending on the operating situation and the taken measures, lower idle or close to idle power consumption, controlled flux density, improved efficiency, and/or reduced or less harmful interference.

The non-regulated DC-to-DC converter 102 can have the control circuitry 100 integrated such that it forms a part of the converter.

Fig. 11 is a flow chart illustrating a method for implementing the adjustment(s) for control of the switching. Hashed boxes indicates optional steps. It should be noted that one or more steps can be performed in other order than the depicted, or in parallel where applicable. The only constraint on which order the steps may be taken is availability of necessary input data for performing the respective step.

In a load determination step 1100, load caused by load circuitry is determined. This can be made by determining input current to the converter or output current from it. It can also be made by determining current through the primary or secondary winding. The determination is preferably a measurement of any of the currents, e.g. by a choke or in case of measuring the current of any of the windings, by a measuring winding.

In an optional input voltage determination step 1102, input voltage or voltage across the primary winding is determined, which can be made by measuring the voltage.

In an optional jittering step 1104, a jitter can be applied to vary the switching frequency. The spread of the jitter can be assigned dependent on for example the actual currents and/or the assigned switching frequency. In the latter case, the application of the jitter is preferably performed after assignment of switching frequency according to what is demonstrated below.

In a switching frequency adjustment step 1106, the switching frequency is adjusted based on the determined load. If the optional input voltage determination step 1102 has been performed, the switching frequency is optionally also adjusted from the determined input voltage. The adjustment can also optionally include the applied jitter for providing the resulting switching frequency. The function for determining switching frequency and optionally spread of the jitter have been discussed above.

In an optional deadtime adjustment step 1108, the deadtime is adjusted based on the assigned switching frequency. The function between assigned switching frequency and adjusted deadtime follows the principle of increased deadtime for increased switching frequency. For example, at an input voltage of 12 V and a switching frequency range from 100 kHz to 500 kHz, the corresponding deadtime range can be 50 ns to 100 ns.

The method according to the present invention is suitable for implementation with aid of processing means, such as computers and/or processors. Therefore, there is provided computer programs, comprising instructions arranged to cause the processing means, processor, or computer to perform the steps of any of embodiments of the method described with reference to Fig. 11, in the control circuitry. The computer programs preferably comprises program code which is stored on a computer readable medium 1200, as illustrated in Fig. 12, which can be loaded and executed by a processing means, processor, or computer 1202 to cause it to perform the method, respectively, according to any of the embodiments of the present invention, preferably as any of the embodiments described with reference to Fig. 11. The computer 1202, which can be present in the apparatus as illustrated in Fig. 1, and computer program product 1200 can be arranged to execute the program code sequentially where actions of the any of the methods are performed stepwise, or be performed on a real-time basis, where actions are taken upon need and availability of needed input data. The processing means, processor, or computer 1202 is preferably what normally is referred to as an embedded system. Thus, the depicted computer readable medium 1200 and computer 1202 in Fig. 12 should be construed to be for illustrative purposes only to provide understanding of the principle, and not to be construed as any direct illustration of the elements.

## Claims

1. A control circuitry for controlling operation of switches of a non-regulated DC-to-DC converter comprising a transformer having a primary winding, which is arranged to be excited by means of electricity provided through the switches, and an output connected to at least one secondary winding of the transformer via a rectifier circuitry and suitable to provide an output voltage to a load circuitry, the control circuitry comprises
measuring means arranged to determine a load caused by any load circuitry; and
adjustment means arranged to adjust a switching frequency for operating the switches in response to the determined load such that the switching frequency is decreased for an increased load and vice versa.

2. The control circuitry according to claim 1, wherein the measuring means is arranged to determine the load by measurement of any of an input current to the converter, an output current from the converter, or a current through any of the windings of the transformer.

3. The control circuitry according to any of claims 1 or 2, wherein the adjustment means is further arranged to adjust a deadtime where neither of the switches conduct such that zero voltage switching is maintained.

4. The control circuitry according to claim 3, wherein the adjustment of the deadtime causes deadtime to increase upon increased switching frequency, and vice versa.

5. The control circuitry according to any of claims 1 to 4, further comprising voltage measuring means arranged to determine an input voltage to the converter, and the adjustment means is further arranged to adjust the switching frequency in response to the determined input voltage such that the switching frequency is increased for a determined increased input voltage, and vice versa.

6. The control circuitry according to any of claims 1 to 5, wherein the adjustment means is further arranged to vary the adjusted switching frequency by application of a jitter for spreading any switching noise in frequency.

7. A non-regulated DC-to-DC converter comprising
a transformer comprising a primary winding and at least one primary winding;
an exciter circuit comprising at least two switches and being arranged to excite the primary winding, wherein the at least one secondary winding is connected via a rectifier circuitry to an output of the converter suitable to provide an output voltage to a load circuitry; and
a control circuitry according to any of claims 1 to 6.

8. The converter according to claim 7, wherein the exciter circuit comprises two switches forming a half-bridge, or four switches forming a full-bridge, or two two-way switches forming a push-pull circuit.

9. A method for controlling operation of switches of a non-regulated DC-to-DC converter comprising a transformer comprising a primary winding and at least one secondary winding; an exciter circuit comprising at least two switches and being arranged to excite the primary winding, wherein the at least one secondary winding is connected via a rectifier circuitry to an output of the converter suitable to provide an output voltage to a load circuitry, the method comprising
determining a load caused by any load circuitry; and
adjusting a switching frequency for operating the switches in response to the determined load such that the switching frequency is decreased for an increased load and vice versa.

10. The method according to claim 9, wherein the determining of the load comprises measuring any of an input current to the converter, an output current from the converter, or a current through any of the windings of the transformer.

11. The method according to any of claims 9 or 10, further comprising adjusting a deadtime where neither of the switches conduct such that zero voltage switching is maintained.

12. The method according to claim 11, wherein the adjusting of the deadtime comprises increasing deadtime upon increased switching frequency, and vice versa.

13. The method according to any of claims 9 to 12, further comprising
determining an input voltage to the converter; and
further adjusting the switching frequency in response to the determined input voltage such that the switching frequency is increased for a determined increased input voltage, and vice versa.

14. The method according to any of claims 9 to 13, further comprising varying the adjusted switching frequency by application of a jitter such that any switching noise is spread in frequency.

15. A computer program comprising program code comprising instructions which when executed on a processor causes the processor to perform the method according to any of claims 9 to 14.
